# EUROPÄISCHE PATENTANMELDUNG

(11) **EP 4 494 805 A1**
(43) Veröffentlichungstag der Anmeldung: **22.01.2025**
(21) Anmeldenummer: 24179878.4
(22) Anmeldetag: 04.06.2024
(51) Int. Cl.: B23K 35/36, B23K 35/02, B23K 35/362, B23K 35/26

(54) **FLUSSMITTEL UND DIESES UMFASSENDE LOTPASTE**

(30) Priorität: 20.07.2023 EP 23186568
(71) Anmelder: Heraeus Electronics GmbH & Co. KG, 63450 Hanau (DE)
(72) Erfinder: Strüben, Jan, 63450 Hanau (DE); Loosz, Christian, 63450 Hanau (DE); Käss, Steffen, 63450 Hanau (DE); Neidert, Michael, 63450 Hanau (DE)
(74) Vertreter: Heraeus IP

(57) **Zusammenfassung**

Flussmittel bestehend aus
(i) 30 bis 80 Gew.-% eines oder mehrerer verschiedener saurer Oligoester mit einer Säurezahl im Bereich von 100 bis 300 mg KOH/g und mit einer gewichtsmittleren Molmasse M_{w} im Bereich von 300 bis 600,
(ii) 10 bis 50 Gew.-% mindestens eines organischen Lösemittels,
(iii) 0 bis 15 Gew.-% eines oder mehrerer Amine, und
(iv) 0 bis 10 Gew.-% eines oder mehrerer von den Bestandteilen (i) bis (iii) verschiedener Bestandteile;
und Lotpaste bestehend aus 80 bis 92 Gew.-% eines oder mehrerer verschiedener Lote und 8 bis 20 Gew.-% des Flussmittels.

## Beschreibung

Die vorliegende Erfindung betrifft ein Flussmittel für Lotpasten und eine das Flussmittel umfassende Lotpaste, insbesondere für das Befestigen von elektronischen Bauteilen auf Substraten.

Lotpasten, insbesondere Weichlotpasten, finden vor allem in der Fertigung von elektronischen Schaltungen Anwendung und dienen der Herstellung einer mechanischen, elektrischen und thermischen Verbindung zwischen einem elektronischen Bauteil und einem Substrat, genauer gesagt, zwischen dafür vorgesehenen Kontaktflächen derselben.

Beispiele für elektronische Bauteile im Sinne der vorliegenden Patentanmeldung umfassen Dioden, LEDs (light emitting diodes, lichtemittierende Dioden), Dies, IGBTs (insulated-gate bipolar transistors, Bipolartransistoren mit isolierter Gate-Elektrode), MOSFETs (Metall-Oxid-Halbleiter-Feldeffekttransistoren), ICs (integrated circuits, integrierte Schaltungen), Sensoren, Kühlkörper, Widerstände, Kondensatoren, Spulen, Verbindungselemente (z. B. Clips), Bodenplatten, Antennen, und dergleichen.

Beispiele für Substrate im Sinne der vorliegenden Patentanmeldung umfassen Leadframes, PCBs (printed circuit boards, gedruckte Leiterplatten), flexible Elektronik, Keramiksubstrate, Metallkeramiksubstrate wie beispielsweise DCB-Substrate (direct copper bonded-Substrate), IMS (isoliertes Metallsubstrat) und dergleichen.

Üblicherweise wird das elektronische Bauteil über die Lotpaste mit dem Substrat in Kontakt bzw. auf dieses aufgebracht. Die Lotpaste wird erwärmt, um das Lot (Lotmetall, Lotlegierung) in der Paste durch beispielsweise einen Reflow-Prozess aufzuschmelzen. Nach dem Abkühlen und Erstarren des Lots sind elektronisches Bauteil und Substrat fest miteinander verbunden.

Neben Lotpulver enthalten Lotpasten typischerweise Flussmittel. Flussmittel dienen unter anderem dazu, die Oxidschicht auf den Oberflächen des Lotpulvers, des elektronischen Bauteils und des Substrates aufzulösen und so für eine bessere Benetzbarkeit beim Lötprozess zu sorgen.

Bestandteil von Lotpasten bildende Flussmittel basieren typischerweise auf Naturharzen wie insbesondere Kolophonium. Ferner sind üblicherweise organische Lösungsmittel, puffernd wirkende Basen wie Amine und Aktivatoren wie Carbonsäuren oder Halogenverbindungen als Bestandteile in solchen Flussmitteln enthalten.

Die Qualität einer Lötung sowie die Lagerstabilität einer Lotpaste hängt unter anderem von den Eigenschaften des Bestandteil der Lotpaste bildenden Lotpulvers ab, beispielsweise von dessen Kugelgröße und Oxidationsgrad. Mit fortschreitender Miniaturisierung in der Elektronik geht die Entwicklung bei Lotpulvern in Richtung feiner Lotkugelgröße; dies erlaubt die Formulierung besonders fein strukturiert aufbringbarer Lotpasten. Jedoch nimmt mit feineren Lotpulvern typischerweise die Lagerstabilität (Viskositätsstabilität bei Raumtemperatur) von Lotpasten sowie deren Lötbarkeit unter Luftatmosphäre stark ab.

Aufgabe der Erfindung ist die Bereitstellung einer Lotpaste mit verbesserter Lagerstabilität und verbesserter Lötbarkeit in Gegenwart von Luft, d.h. mit guter Lötbarkeit, auch ohne besondere Maßnahmen zum Ausschluss von Luftsauerstoff ergreifen zu müssen, wie Vakuumlöten oder Löten unter Schutzgas.

Die Anmelderin konnte ein die Aufgabe lösendes Flussmittel respektive eine die Aufgabe lösende, das Flussmittel umfassende Lotpaste entwickeln. Dementsprechend besteht die Erfindung in der Bereitstellung eines Flussmittels bestehend aus
(i) 30 bis 80 Gew.-% (Gewichts-%), bevorzugt 50 bis 70 Gew.-% eines oder mehrerer saurer Oligoester mit einer Säurezahl im Bereich von 100 bis 300 mg KOH/g und mit einer gewichtsmittleren Molmasse M_{w} im Bereich von 300 bis 600,
(ii) 10 bis 50 Gew.-%, bevorzugt 20 bis 40 Gew.-% mindestens eines organischen Lösemittels,
(iii) 0 bis 15 Gew.-%, bevorzugt 4 bis 12 Gew.-% eines oder mehrerer Amine, und
(iv) 0 bis 10 Gew.-% eines oder mehrerer von den Bestandteilen (i) bis (iii) verschiedener Bestandteile.

Der in dieser Beschreibung und in den Beispielen verwendete Ausdruck "Säurezahl" bezieht sich auf eine gemäß DIN EN ISO 2114 in mg KOH/g (Milligramm KOH pro Gramm) bestimmbare Säurezahl (SZ).

Sofern nicht anders vermerkt, handelt es sich bei allen in dieser Beschreibung und in den Beispielen zitierten Normen jeweils um die aktuelle Fassung zum Zeitpunkt des Prioritätsdatums der vorliegenden Patentanmeldung.

Die in dieser Beschreibung und in den Beispielen erwähnte gewichtsmittlere Molmasse M_{w} kann in üblicher dem Fachmann bekannter Weise mittels GPC beispielsweise gemäß DIN 55672-1 (März 2016; vernetztes Polystyrol als immobile Phase, Tetrahydrofuran als flüssige Phase, Polystyrol-Standards, 23°C) bestimmt werden.

Je nach Anwesenheit der Bestandteile (iii) und/oder (iv) kann das Flussmittel dementsprechend aus den Bestandteilen (i) plus (ii) oder (i) plus (ii) plus (iii) oder (i) plus (ii) plus (iv) oder (i) plus (ii) plus (iii) plus (iv) bestehen und bei jeder dieser Alternativen beträgt die Summe der Gew.-% der jeweiligen Bestandteile 100 Gew.-%.

Als Bestandteil (i) umfasst das erfindungsgemäße Flussmittel 30 bis 80 Gew.-%, bevorzugt 50 bis 70 Gew.-% eines oder mehrerer verschiedener saurer Oligoester mit einer Säurezahl im Bereich von 100 bis 300 mg KOH/g und mit einer gewichtsmittleren Molmasse M_{w} im Bereich von 300 bis 600. Bevorzugt umfassen der oder die verschiedenen sauren Oligoester des Bestandteils (i) keinerlei Aminogruppen, d.h. weder primäre noch sekundäre noch tertiäre Aminogruppen. Bevorzugt umfasst Bestandteil (i) einen oder mehrere verschiedene saure Oligoester mit einer Säurezahl im Bereich von 200 bis 250 mg KOH/g und mit einer gewichtsmittleren Molmasse M_{w} im Bereich von 400 bis 550. Besonders bevorzugt umfasst Bestandteil (i) nur einen sauren Oligoester mit einer Säurezahl im Bereich von 200 bis 250 mg KOH/g und mit einer gewichtsmittleren Molmasse M_{w} im Bereich von 400 bis 550. Hierin wird unterschieden zwischen einem sauren Oligoester und mehreren verschiedenen sauren Oligoestern. Zur Vermeidung jeglichen Missverständnisses, der Begriff "ein saurer Oligoester" bezieht sich auf ein Oligomerengemisch respektive auf einen oligomeren Polyester mit qualitativ und quantitativ definiertem Aufbau, d.h. mit einem Aufbau aus nach Art und Menge definierten Bausteinen. Wie schon aus der Erwähnung der gewichtsmittleren Molmasse M_{w} hervorgeht, weist auch der "eine saure Oligoester" eine Molmassenverteilung auf, d.h. er liegt als Gemisch verschieden großer oligomerer Polyestermoleküle vor. Dementsprechend bezieht sich der Begriff "mehrere verschiedene saure Oligoester" auf eine Kombination verschiedener Oligomerengemische respektive auf mehrere jeweils verschieden aufgebaute oligomere Polyester; jeder dieser verschiedenen oligomeren Polyester weist dabei eine Molmassenverteilung auf.

Die sauren Oligoester können aus einem oder mehreren verschiedenen niedermolekularen Polyolen als Hydroxylbausteine und einer oder mehreren verschiedenen niedermolekularen Polycarbonsäuren als Carboxylbausteine aufgebaut sein.

Der hierin verwendete Begriff "niedermolekular" bezieht sich auf durch Summen- und Strukturformel definierte und keine Molmassenverteilung aufweisende Verbindungen.

Bei dem oder den sauren Oligoestern handelt es sich bevorzugt um lineare saure Oligoester mit einer oder zwei terminalen Carboxylgruppen respektive um ein Gemisch solcher Oligoester. Die bevorzugten linearen sauren Oligoester können dabei aus einem oder mehreren verschiedenen niedermolekularen Diolen und einer oder mehreren verschiedenen niedermolekularen Dicarbonsäuren aufgebaut sein. Entsprechend dem Vorerwähnten umfassen sowohl die niedermolekularen Diole als auch die niedermolekularen Dicarbonsäuren bevorzugt keine Aminogruppen; d.h. die niedermolekularen Diole umfassen bevorzugt keine Aminoalkohole (Alkoholamine) und die niedermolekularen Dicarbonsäuren umfassen bevorzugt keine Dicarbonsäuren mit Aminogruppen im Molekül. Beispiele für niedermolekulare Diole umfassen aliphatische und cycloaliphatische Diole wie beispielsweise Ethylenglykol, 2-Ethyl-1,3-hexandiol, 1,2- und 1,3-Propylenglykol, 1,3-Butandiol, 1,4-Butandiol, 2,3-Butandiol, 1,5-Pentandiol, 1,6-Hexandiol, Trimethylhexandiol, hydrierte Bisphenole, Cyclohexandiole, 1,4-Cyclohexandimethanol, Neopentylglykol und Butylethylpropandiol. Bevorzugt handelt es sich bei den niedermolekularen Diolen um solche ausgewählt aus der Gruppe bestehend aus niedermolekularen cycloaliphatischen Diolen. Beispiele für niedermolekulare Dicarbonsäuren umfassen Tetrahydrophthalsäure, Maleinsäure, Fumarsäure, Hexahydrophthalsäure, 1,3-Cyclohexandicarbonsäure und 1,4-Cyclohexandicarbonsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure. Bevorzugt handelt es sich bei den Dicarbonsäuren um solche ausgewählt aus der Gruppe bestehend aus aromatischen Dicarbonsäuren, wie beispielsweise die isomeren Phthalsäuren, speziell ortho-Phthalsäure.

Verfahren zur Herstellung der sauren Oligoester durch Polykondensation niedermolekularer Polyole als Hydroxylbausteine und niedermolekularer Polycarbonsäuren als Carboxylbausteine sind dem Fachmann, d.h. einem Kunstharz- oder Polymerchemiker wohlbekannt. Bei der üblicherweise in der Schmelze durchgeführten Polykondensation kommt es im Zuge einer Veresterungsreaktion zur Wasserabspaltung; das Wasser wird dabei aus der Reaktionsmischung entfernt, insbesondere durch Abdestillieren, gegebenenfalls azeotrop oder mit Unterstützung durch Anlegen eines Unterdrucks. Selbstverständlich kann anstelle von Polycarbonsäure - soweit existent - entsprechendes Säureanhydrid verwendet werden, welches unter Ringöffnung mit dem oder den Hydroxylbausteinen verestert werden kann.

Als Bestandteil (ii) umfasst das erfindungsgemäße Flussmittel 10 bis 50 Gew.-%, bevorzugt 20 bis 40 Gew.-% mindestens eines organischen Lösemittels. Beispiele umfassen bei 25 °C flüssige Diole, Alkohole, Etheralkohole und Ketone, insbesondere Trimethylpropanol, 1,2-Oktandiol, 1,8-Oktandiol, 2,5-Dimethyl-2,5-hexandiol, Isobornylcyclohexanol, Glykolether, 2-Ethyl-1,3-hexandiol, n-Decylalkohol, 2-Methyl-2,4-pentandiol, Terpineol und Isopropanol sowie Mischungen davon. Beispiele für Glykolether umfassen Mono-, Di-, Tripropylenglykolmethylether, Mono-, Di-, Tripropylenglykol-n-butylether, Mono-, Di-, Triethylenglykol-n-butylether, Ethylenglykoldimethylether, Triethylenglykolmethylether, Diethylenglykoldibutylether, Tetraethylenglykoldimethylether und Diethylenglykolmonohexylether sowie Mischungen davon. Zur Vermeidung von Missverständnissen, die hier an dieser Stelle als Beispiele genannten Diole betreffen bei der Rezeptierung des erfindungsgemäßen Flussmittels als ein Bestandteil vom Typ (ii) bewusst zugesetzte Diole, nicht zu verwechseln mit etwaigen ungewollt und unvermeidlich in das erfindungsgemäße Flussmittel gelangten Verunreinigungen in Form von Spuren von bei der Synthese von sauren Oligoestern vom Typ (i) als Hydroxylbausteine verwendeten und nicht in den oder die Oligoester eingebauten (nicht einkondensierten) Diolen.

Als Bestandteil (iii) umfasst das erfindungsgemäße Flussmittel 0 bis 15 Gew.-%, bevorzugt 4 bis 12 Gew.-% eines oder mehrerer Amine, d.h. das erfindungsgemäße Flussmittel kann ein oder mehrere Amine umfassen oder frei davon sein, bevorzugt sind ein oder mehrere Amine umfasst. Beispiele für Amine umfassen N,N,N',N'-Tetramethylethylendiamin, N,N,N',N'-Tetraethylethylendiamin, N,N,N',N'-Tetrapropylethylendiamin, N-Coco-1,3-Diaminopropan, 1,6-Diaminohexan, 1,7-Diaminoheptan, 1,8-Diaminooktan, 1,9-Diaminononan und 1,10-Diaminodecan, Bis(2-ethylhexyl)amin, Bis(2-methylhexyl)amin, Diethylamin, Triethylamin, Cyclohexylamin, Diethanolamin, Triethanolamin, hydriertes Talg-alkylamin, hydriertes (Talg-alkyl)dimethylamin und hydriertes Bis(talg-alkyl)methylamin.

Als Bestandteil (iv) umfasst das erfindungsgemäße Flussmittel 0 bis 10 Gew.-% eines oder mehrerer von den Bestandteilen (i) bis (iii) verschiedener Bestandteile, d.h. das erfindungsgemäße Flussmittel kann einen oder mehrere Bestandteile vom Typ (iv) umfassen oder frei davon sein. Beispiele für Bestandteile vom Typ (iv) umfassen insbesondere Verdickungsmittel, aber gegebenenfalls auch Aktivatoren, Entschäumer, Benetzungshilfsmittel und/oder Stabilisatoren. Ein nicht zu unterschätzender Vorteil des erfindungsgemäßen Flussmittels ist es allerdings, Aktivatoren nicht zwingend zu benötigen, also auch frei von Aktivatoren formuliert werden zu können.

Beispiele für Verdickungsmittel umfassen Ethylcellulose, hydriertes Rizinusöl, Glycerin-tris-12-hydroxystearin und modifiziertes Glycerin-tris-12-hydroxystearin.

Beispiele für als Aktivatoren verwendbare niedermolekulare Carbonsäuren umfassen Oxalsäure, Adipinsäure, Malonsäure, Bernsteinsäure, Glutarsäure, Pimelinsäure, Korksäure, Azelainsäure, Sebacinsäure, Undecandisäure, Dodecandisäure und Tridecandisäure. Zur Vermeidung von Missverständnissen, die hier an dieser Stelle als Beispiele genannten Diarbonsäuren betreffen bei der Rezeptierung des erfindungsgemäßen Flussmittels als ein Bestandteil vom Typ (iv) bewusst zugesetzte niedermolekulare Carbonsäuren, nicht zu verwechseln mit etwaigen ungewollt und unvermeidlich in das erfindungsgemäße Flussmittel gelangten Verunreinigungen in Form von Spuren von bei der Synthese von sauren Oligoestern vom Typ (i) als Carboxylbausteine verwendeten und nicht in den oder die Oligoester eingebauten (nicht einkondensierten) Carbonsäuren.

Beispiele für als Aktivatoren verwendbare halogenhaltige Verbindungen umfassen Anilinhydrochlorid, Glutaminsäurehydrochlorid, Diethanolaminhydrochlorid, Diethanolaminhydrobromid, Triethanolaminhydrochlorid, Triethanolaminhydrobromid und trans-2,3-Dibrom-2-buten-1,4-diol.

Bevorzugt weist das erfindungsgemäße Flussmittel, d.h. das gesamte aus den Bestandteilen (i) plus (ii) oder (i) plus (ii) plus (iii) oder (i) plus (ii) plus (iv) oder (i) plus (ii) plus (iii) plus (iv) bestehende Flussmittel eine Flussmittel-Säurezahl (FMSZ) im Bereich von 100 bis 250 mg KOH/g, bevorzugt im Bereich von 120 bis 220 mg KOH/g auf. Die in dieser Beschreibung und in den Beispielen erwähnte Flussmittel-Säurezahl kann gemäß IPC TM-650 2.3.13 (vom 06/2004 Revision A) bestimmt werden. Die Flussmittel-Säurezahl wird zumindest im Wesentlichen oder vollständig aus den Carboxylgruppen des Bestandteils (i) und den gegebenenfalls durch Bestandteil (iv) beigesteuerten Carboxylgruppen gebildet.

Ferner besteht die Erfindung in der Bereitstellung einer Lotpaste bestehend aus 80 bis 92 Gew.-% eines oder mehrerer verschiedener Lote und 8 bis 20 Gew.-% eines erfindungsgemäßen Flussmittels, d.h. eines erfindungsgemäßen Flussmittels in einer seiner vorerwähnten Ausführungsformen. Die Summe der Gew.-%-Anteile des oder der Lote und des erfindungsgemäßen Flussmittels beträgt dabei 100 Gew.-%.

Die erfindungsgemäße Lotpaste umfasst wie gesagt 80 bis 92 Gew.-% eines oder mehrerer verschiedener Lote, insbesondere Lot(e) auf Zinnbasis (Lotlegierungen umfassend mindestens 80 Gew.-%, vorzugsweise mindestens 83 Gew.-%, insbesondere 90 bis 99,5 Gew.-% Zinn) oder auf Bismut/Zinn-Basis (Lotlegierungen umfassend 50 bis 60 Gew.-% Bismut und 40 bis 50 Gew.-% Zinn).

Es ist bevorzugt, dass das Lot eine Liquidustemperatur in einem Bereich von 150 bis 350°C, vorzugsweise in einem Bereich von 180 bis 300 °C, aufweist.

Das oder die Lote liegen in der erfindungsgemäßen Lotpaste jeweils als Lotpulver vor, wie für Lotpasten üblich. Die Kugelgröße der das Lotpulver ausmachenden Lotkugeln kann dabei jeder der Klassifikationen gemäß der Norm IPC J-STD-005A entsprechen, d.h. die erfindungsgemäße Lotpaste kann Lotkugeln beliebigen Kugelgrößentyps innerhalb des Typenbereichs T1 bis T7 aufweisen.

Vorzugsweise weist die erfindungsgemäße Lotpaste eine Viskosität von 50 bis 250 Pa·s auf. Die in dieser Beschreibung und in den Beispielen erwähnte Viskosität kann mit einem Platte-Platte-Rheometer mit einem Plattendurchmesser von 50 mm und einem Messspalt von 400 µm (beispielsweise das Platte-Platte-Rheometer Physica MCR 150 der Firma Anton-Paar). bei 25 °C und bei einer Scherrate von 10 s⁻¹ bestimmt werden.

Ein weiterer Gegenstand der vorliegenden Erfindung ist ein Verfahren zur Herstellung einer erfindungsgemäßen Lotpaste.

Dabei umfasst das Verfahren zur Herstellung einer erfindungsgemäßen Lotpaste die Schritte:
- Mischen der Bestandteile eines erfindungsgemäßen Flussmittels; und
- Zugabe eines Lotpulvers wie vorerwähnt.

Die Zugabe des Lotpulvers erfolgt vorzugsweise in mehreren Portionen unter Rühren zu einer vorgelegten Mischung der Bestandteile des erfindungsgemäßen Flussmittels, im Allgemeinen ohne Erwärmen.

Die erfindungsgemäße Lotpaste kann verwendet werden zum Verbinden von elektronischen Bauteilen mit Substraten. Sie kann auch verwendet werden zur Herstellung von Lotdepots auf Substraten.

Beim Verbinden von elektronischen Bauteilen mit Substraten erfolgt die Kontaktierung der Kontaktfläche des Substrates und der Kontaktfläche des elektronischen Bauteils über die erfindungsgemäße Lotpaste.

Ein Verfahren zur Befestigung eines elektronischen Bauteils auf einem Substrat unter Verwendung einer erfindungsgemäßen Lotpaste kann die folgenden Schritte umfassen:
a) Bereitstellen eines elektronischen Bauteils mit einer Kontaktfläche,
b) Bereitstellen eines Substrates mit einer Kontaktfläche,
c) Versehen der Kontaktfläche des elektronischen Bauteils und/oder der Kontaktfläche des Substrates mit der Lotpaste,
d) Kontaktieren der Kontaktfläche des elektronischen Bauteils mit der Kontaktfläche des Substrates über die Lotpaste; und
e) Erwärmen der Lotpaste über die Liquidustemperatur des Lots und anschließendes Abkühlen und Erstarren lassen des Lots unter Ausbilden einer festen Verbindung zwischen dem elektronischen Bauteil und dem Substrat.

Die Schritte a) und b) sind selbsterklärend und bedürfen keiner näheren Erläuterung.

In Schritt c) kann die erfindungsgemäße Lotpaste mittels üblicher dem Fachmann bekannter Verfahren auf eine der oder auf beide Kontaktflächen appliziert werden, beispielsweise mittels Sieb- oder Schablonendruck oder Dispensieren oder Jetten.

In Schritt d) können die Kontaktflächen des elektronischen Bauteils und des Substrates über die Lotpaste miteinander kontaktiert werden. Anders ausgedrückt, es kann eine Sandwichanordnung geschaffen werden aus dem elektronischen Bauteil und dem Substrat mit der Lotpaste zwischen deren Kontaktflächen.

In Schritt e) kann die Sandwichanordnung verlötet werden, indem die Lotpaste über die Liquidustemperatur des Lots erwärmt wird, so dass es zur Bildung einer festen Verbindung zwischen dem elektronischen Bauteil und dem Substrat über die Lotpaste nach anschließendem Abkühlen und Erstarren des Lots kommt. Dabei wird die Lotpaste vorzugsweise so erwärmt, dass das Lot in seine Liquidusphase übergeht, jedoch ohne dass es zu einer Schädigung des elektronischen Bauteils und/oder des Substrates kommt. Die Sandwichanordnung respektive die Lotpaste wird vorzugsweise auf eine Temperatur erwärmt, die 5 bis 60 °C, vorzugsweise 10 bis 50 °C, über der Liquidustemperatur des Lots liegt.

Vorteilhafterweise gestattet die das erfindungsgemäße Flussmittel umfassende Lotpaste das Verlöten gemäß Schritt e) unabhängig von der Kugelgröße des in der Lotpaste verwendeten Lotpulvers an der Luft, d.h. sogar beim Arbeiten mit besonders feinem Lotpulver des Typenbereichs 6 bis 7 gemäß vorerwähnter Norm IPC J-STD-005A.

### Beispiele

Beispiel 1.1 (Herstellung eines sauren Oligoesters aus 1,4-Cyclohexandimethanol und o-Phthalsäure): 100 g 1,4-Cyclohexandimethanol und 150 g o-Phthalsäure wurden in einem Becherglas unter ständigem Rühren auf 145°C erhitzt, bis eine klare und luftblasenfreie Zusammensetzung erhalten wurde. Danach wurde die erhaltene Zusammensetzung bei Raumtemperatur abkühlen gelassen. Die Säurezahl des so erhaltenen Oligoesters betrug 215 mg KOH/g. Die gewichtsmittlere Molmasse M_{w} betrug 494.

Beispiel 1.2 (Herstellung eines sauren Oligoesters aus Glyzerin und o-Phthalsäure): 100 g Glyzerin und 150 g o-Phthalsäure wurden in einem Becherglas unter ständigem Rühren auf 145°C erhitzt, bis eine klare und luftblasenfreie Zusammensetzung erhalten wurde. Danach wurde die erhaltene Zusammensetzung bei Raumtemperatur abkühlen gelassen. Die Säurezahl des so erhaltenen Oligoesters betrug 220 mg KOH/g. Die gewichtsmittlere Molmasse M_{w} betrug 508.

Beispiel 1.3 (Herstellung eines sauren Oligoesters aus 2-Ethyl-1,3-hexandiol und o-Phthalsäureanhydrid): 100 g 2-Ethyl-1,3-hexandiol und 150 g o-Phthalsäureanhydrid wurden in einem Becherglas unter ständigem Rühren auf 145°C erhitzt, bis eine klare und luftblasenfreie Zusammensetzung erhalten wurde. Danach wurde die erhaltene Zusammensetzung bei Raumtemperatur abkühlen gelassen. Die Säurezahl des so erhaltenen Oligoesters betrug 210 mg KOH/g. Die gewichtsmittlere Molmasse M_{w} betrug 497.

### Beispiel 2 (Herstellung von Flussmitteln)

Jeder der sauren Oligoester aus den Beispielen 1.1, 1.2 und 1.3 wurde bei 110°C in Diethylenglykolmonohexylether gemäß Tabelle 1 gelöst. Danach wurde die Mischung auf 80°C abgekühlt und es wurden weitere Bestandteile gemäß Tabelle 1 zugefügt und homogenisiert.

### Beispiel 3 (Herstellung und Prüfung von Lotpasten):

Für die Herstellung der Lotpasten wurden jeweils 11 Gew.-Teile Flussmittel mit jeweils 89 Gew.-Teilen Lotpulver (SnAgCu: Sn 96,5 Gew.-%, Ag 3,0 Gew.-%, Cu 0,5 Gew.-%, Typ 6 gemäß der Norm IPC J-STD-005A) zu Lotpasten vermischt. Deren Benetzungsvermögen (Lötbarkeit in Luftatmosphäre) und Viskositätsstabilität bei Raumtemperatur wurden geprüft.

### Prüfung des Benetzungsvermögens

Die Benetzungseigenschaften der Lotpasten wurden mit Hilfe des Aufschmelztests gemäß der Norm IPC-TM-650 (1/95) Testmethode 2.4.45 an Luftatmosphäre beurteilt. Dazu wurden die zu testenden Lotpasten auf Kupferbleche (20 mm x 20 mm x 0,5 mm) aufgebracht. Sofern die Kupferbleche eine Oxidschicht auf der Oberfläche aufwiesen, wurden diese mit Schleifpapier der Körnung P600 metallisch blank geschliffen und mit Alkohol gereinigt. Kupferbleche, die eine helle und reine Oberfläche aufwiesen, wurden lediglich mit Alkohol gereinigt. Die vorbereiteten Kupferbleche wurden mit Hilfe einer Schablone bedruckt. Dazu wurde die Schablone fest auf das Kupferblech gedrückt, so dass sich die Öffnungen der Schablone in der Mitte des Kupferblechs befanden. Die zu testende Lotpaste wurde auf einen Japanspachtel gegeben und zuerst leicht, dann mit etwas mehr Druck über die Öffnungen der Schablone gestrichen, bis sich keine Lotpaste mehr auf der Schablone befand. Dann wurde die Schablone vorsichtig unter Erhalt des durch die Schablone vorgegebenen Musters entfernt. Das bedruckte Kupferblech wurde für 2 Minuten auf eine erste 200 °C heiße (d.h. auf eine Temperatur unterhalb der Liquidustemperatur des Lots eingestellte) Heizplatte und dann sofort auf eine zweite Heizplatte mit einer 50 °C über der Liquidustemperatur des Lots liegenden Temperatur gelegt. Nach Aufschmelzen der Lotpaste bzw. des Lots wurde das Kupferblech noch 5 Sekunden auf der zweiten Heizplatte belassen und dann davon entfernt und abgekühlt.

Nach dem Abkühlen der Lotpaste wurde beurteilt, ob diese zu Flecken aufgeschmolzen war, die der Größe der Öffnungen der Schablone entsprachen oder zu mehreren kleinen Flecken, und ob die Lotpaste nach dem Aufschmelzen scharfe Ränder aufwies. Weiterhin wurde beurteilt, ob die Oberfläche glänzend oder matt war.

Die Lotpasten wurden in vier Klassen eingeteilt:
Klasse 1: Die umgeschmolzene Fläche war größer als die zuvor mit Lotpaste bedruckte Fläche.
Klasse 2: Die umgeschmolzene Fläche entsprach der zuvor mit Lotpaste bedruckten Fläche.
Klasse 3: Die umgeschmolzene Fläche war kleiner als die zuvor mit Lotpaste bedruckte Fläche (leichte Entnetzung zu erkennen).
Klasse 4: Die Lotpaste hatte eine oder mehrere Lotkugeln gebildet und das Kupferblech nicht benetzt oder war nicht vollständig aufgeschmolzen.

### Prüfung der Viskositätsstabilität bei Raumtemperatur

Zunächst wurde die initiale Viskosität der jeweils frisch hergestellten Lotpasten bei 25 °C und einer Scherrate von 10 s⁻¹ mit einem Platte-Platte-Rheometer (Physica MCR 150 der Firma Anton-Paar; Plattendurchmesser 50 mm, Messspalt 400 µm) bestimmt. Die Lotpasten wurden anschließend bei Raumtemperatur (23 °C) jeweils in einem verschlossenen Behälter gelagert und in einem Abstand von je 10 Tagen erneut wie zuvor angegeben gemessen. Vor der jeweiligen Viskositätsmessung wurde jede Lotpaste kurz manuell mit einem Spatel homogen durchmischt. Die Viskositätsstabilität nach 400 Tagen Lagerung wurde wie folgt bewertet: Viskositätsveränderung von bis zu 15 % im Vergleich zur initialen Viskosität: Klasse 1 Viskositätsänderung von >15 bis 25 % im Vergleich zur initialen Viskosität: Klasse 2 Viskositätsänderung von >25% im Vergleich zur initialen Viskosität: Klasse 3

Nachfolgende Tabelle zeigt die Zusammensetzung der Flussmittel in Gew.-% (1 bis 6 erfindungsgemäß; V1 und V2 Vergleichs-Flussmittel) sowie die mit den damit formulierten Lotpasten erhaltenen Prüfergebnisse.

| **Flussmittel** | **1** | **2** | **3** | **4** | **5** | **6** | **V1** | **V2** |
|---|---|---|---|---|---|---|---|---|
| | | | | | | | | |
| Oligoester 1.1 | 60 | 50 | 40 | 50 | | | | |
| Oligoester 1.2 | | | | | 60 | | | |
| Oligoester 1.3 | | | | | | 60 | | |
| Kolophoniumharz (M_{w} 375, SZ 150 mq KOH/g) | | | | | | | 40 | |
| Kolophoniumharz (M_{w} 375, SZ 240 mg KOH/g) | | | | | | | | 44 |
| Diethylenglykolmonohexylether | 27 | 37 | 47 | 27 | 27 | 27 | 40 | 35 |
| N,N,N',N'-Tetramethylethylendiamin | 10 | 10 | 10 | 10 | 10 | 10 | 10 | 5 |
| Dodecandisäure | | | | 10 | | | 7 | 13 |
| Verdicker (Disparlon 6500 von King Industries) | 3 | 3 | 3 | 3 | 3 | 3 | 3 | 3 |
| | | | | | | | | |
| Benetzungsvermögen | 2 | 3 | 3 | 2 | 2 | 2 | 4 | 2 |
| Viskositätsstabilität | 1 | 1 | 1 | 2 | 1 | 2 | 2 | 3 |

## Patentansprüche

1. Flussmittel bestehend aus
(i) 30 bis 80 Gew.-% eines oder mehrerer verschiedener saurer Oligoester mit einer Säurezahl im Bereich von 100 bis 300 mg KOH/g und mit einer gewichtsmittleren Molmasse M_{w} im Bereich von 300 bis 600,
(ii) 10 bis 50 Gew.-% mindestens eines organischen Lösemittels,
(iii) 0 bis 15 Gew.-% eines oder mehrerer Amine, und
(iv) 0 bis 10 Gew.-% eines oder mehrerer von den Bestandteilen (i) bis (iii) verschiedener Bestandteile.

2. Flussmittel nach Anspruch 1, wobei der oder die sauren Oligoester eine Säurezahl im Bereich von 200 bis 250 mg KOH/g und eine gewichtsmittlere Molmasse M_{w} im Bereich von 400 bis 550 haben.

3. Flussmittel nach Anspruch 1 oder 2, wobei der oder die sauren Oligoester aus einem oder mehreren verschiedenen niedermolekularen Polyolen als Hydroxylbausteine und einer oder mehreren verschiedenen niedermolekularen Polycarbonsäuren als Carboxylbausteine aufgebaut sind.

4. Flussmittel nach einem der vorhergehenden Ansprüche, wobei es sich bei dem oder den sauren Oligoestern um lineare saure Oligoester mit einer oder zwei terminalen Carboxylgruppen respektive um ein Gemisch solcher Oligoester handelt.

5. Flussmittel nach Anspruch 4, wobei der oder die linearen sauren Oligoester aus einem oder mehreren verschiedenen niedermolekularen Diolen und einer oder mehreren verschiedenen niedermolekularen Dicarbonsäuren aufgebaut sind.

6. Lotpaste bestehend aus 80 bis 92 Gew.-% eines oder mehrerer verschiedener Lote und 8 bis 20 Gew.-% eines Flussmittels nach einem der Ansprüche 1 bis 5.

7. Verwendung einer Lotpaste nach Anspruch 6 zum Verbinden von elektronischen Bauteilen mit Substraten oder zur Herstellung von Lotdepots auf Substraten.
